# NEUE EUROPÄISCHE PATENTSCHRIFT

(11) **EP 0 541 826 B2**
(45) Veröffentlichungstag und Bekanntmachung des Hinweises auf die Entscheidung über den Einspruch: **15.07.1998**
(45) Hinweis auf die Patenterteilung: 14.09.1994
(21) Anmeldenummer: 91118690.6
(22) Anmeldetag: 02.11.1991
(51) Int. Cl.: G01D 5/26, G01D 5/249, G01D 5/36

(54) **Positionsmesseinrichtung für wenigstens eine Messrichtung**
Position-measuring device for at least one measuring-direction
Dispositif de mesure de positions pour au moins une direction de mesure

(43) Veröffentlichungstag der Anmeldung: 19.05.1993
(73) Patentinhaber: Dr. Johannes Heidenhain GmbH, D-83292 Traunreut (DE)
(72) Erfinder: Kober, Hans-Rudolf, Dipl.-Ing., W-8261 Kirchweihdach (DE)

(56) Entgegenhaltungen:
- EP-A- 82 441
- EP-A- 0 165 392
- WO-A-90/02315
- CH-A- 648 120
- CH-A- 649 629
- DE-A- 2 945 895
- DE-C- 3 409 298

## Beschreibung

Die Erfindung betrifft eine Positionsmeßeinrichtung.

Eine derartige Positionsmeßeinrichtung wird insbesondere bei Bearbeitungsmaschinen oder Meßmaschinen zur Messung der Relativlage von Objekten eingesetzt.

Eine Positionsmeßeinrichtung mit Markierungen auf mehreren Seiten einer Maßverkörperung ist aus der EP 0082441 B1 bekannt.

Aus der DE-PS 33 34 400 ist eine lichtelektrische Positionsmeßeinrichtung bekannt, bei der die Teilung einer Maßverkörperung von einer Abtasteinheit mittels einer Abtastteilung sowohl im Durchlicht als auch im Auflicht abgetastet wird; das im Auflicht erzeugte Abtastsignal und das im Durchlicht erzeugte Abtastsignal werden zur Gewinnung eines Abtastsignals mit definierter Nullage einander überlagert.

In der DE-PS 36 05 789 ist eine lichtelektrische positionsmeßeinrichtung beschrieben, bei der zur Vermeidung von Meßungenauigkeiten infolge von Unebenheiten einer Maßverkörperung und von Führungsfehlern der Objekte die Teilung der Maßverkörperung zu beiden Seiten der Maßverkörperung von zwei Abtasteinheiten abgetastet wird.

Der DE-PS 34 09 298 entnimmt man eine Positionsmeßeinrichtung, bei der eine Maßverkörperung eine erste Teilung in einer ersten Teilungsebene auf der einen Seite der neutralen Ebene und eine zweite Teilung in einer zweiten Teilungsebene auf der anderen Seite der neutralen Ebene aufweist; die erste Teilung wird von einer ersten Abtasteinheit und die zweite Teilung von einer zweiten Abtasteinheit abgetastet. Die von den beiden Abtasteinheiten gelieferten Abtastsignale werden zur Bildung von Positionsmeßwerten in analoger Form einander überlagert oder in digitaler Form rechnerisch miteinander verknüpft.

Der Erfindung liegt die Aufgabe zugrunde. bei einer Positionsmeßeinrichtung der genannten Gattung eine platzsparende Anordnung von Markierungen auf einer Maßverkörperung anzugeben.

Diese Aufgabe wird erfindungsgemäß durch die Merkmale der Ansprüche 1, 4 oder 5 gelöst.

Die mit der Erfindung erzielten Vorteile bestehen insbesondere darin, daß durch die Anordnung von Markierungen auf beiden Seiten der Maßverkörperung infolge der Platzersparnis die Querschnittsabmessungen der Maßverkörperung verringert werden können, so daß ein kompakter Aufbau der Meßeinrichtung erzielt wird. Da die Markierungen auf beiden Seiten der Maßverkörperung von jeweils einer Abtasteinheit abgetastet werden, deren Abtaststellen sich gegenüberliegen, werden Meßungenauigkeiten vermieden, die bei nebeneinanderliegenden Abtaststellen auftreten können.

Vorteilhafte Weiterbildungen der Erfindung entnimmt man den abhängigen Ansprüchen.

Ausführungsbeispiele der Erfindung werden anhand der Zeichnung näher erläutert.

Es zeigen
- Figur 1: eine Maßverkörperung mit zwei gekreuzten Linearteilungen,
- Figur 2: eine Maßverkörperung mit einer Linearteilung und mit einer Referenzmarke sowie
- Figur 3: eine Maßverkörperung mit einer inkrementalen Teilung und mit einer Codeteilung.

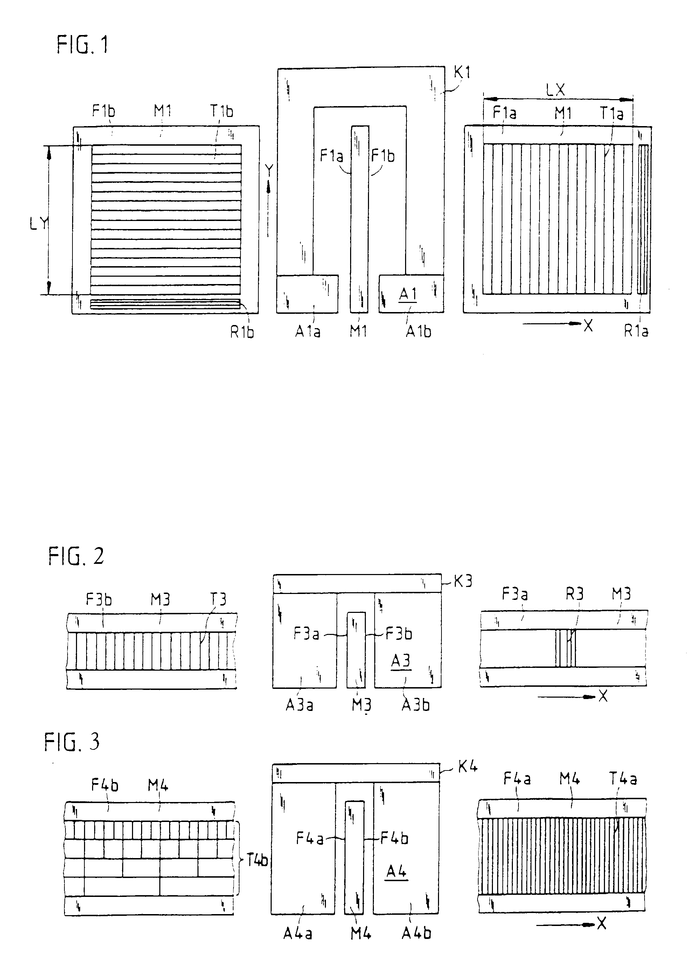

In Figur 1 ist eine Maßverkörperung M1 mit einer ersten Markierung in Form einer ersten Teilung T1a für eine erste Meßrichtung X und mit einer zweiten Markierung in Form einer zweiten Teilung T1b für eine zweite Meßrichtung Y gezeigt; die beiden Meßrichtungen X, Y verlaufen senkrecht zueinander. Die erste Teilung T1a für die erste Meßrichtung X ist auf einer ersten Oberfläche F1a und die zweite Teilung T1b für die zweite Meßrichtung Y auf einer gegenüberliegenden zweiten Oberfläche F1b der Maßverkörperung M1 angeordnet; die beiden Teilungen T1a, T1b bestehen jeweils aus Linearteilungen mit senkrecht zueinander verlaufenden Teilungsstrichen. Die Teilungsstriche der ersten Teilung T1a erstrecken sich senkrecht zu ihrer zugehörigen ersten Meßrichtung X über die gesamte Meßlänge LY der zweiten Meßrichtung Y; desgleichen erstrecken sich die Teilungsstriche der zweiten Teilung T1b senkrecht zu ihrer zugehörigen zweiten Meßrichtung Y über die gesamte Meßlänge LX der ersten Meßrichtung X. Die Maßverkörperung M1 ist mit einem der zu messenden Objekte (nicht dargestellt) verbunden.

Der ersten Teilung T1a für die erste Meßrichtung X ist eine erste Referenzmarke R1a zugeordnet, die neben der ersten Teilung T1a auf der ersten Oberfläche F1a der ersten Maßverkörperung M1 angeordnet und über die gesamte Meßlänge LY der zu ihrer zugehörigen ersten Meßrichtung X senkrechten zweiten Meßrichtung Y längserstreckt ist. Desgleichen ist der zweiten Teilung T1b für die zweite Meßrichtung Y eine zweite Referenzmarke R1b zugeordnet, die neben der zweiten Teilung T1b auf der zweiten Oberfläche F1b der Maßverkörperung M1 angeordnet und über die gesamte Meßlänge LX der zu ihrer zugehörigen zweiten Meßrichtung Y senkrechten ersten Meßrichtung X längserstreckt ist.

Eine mit dem anderen Objekt verbundene Abtasteinrichtung A1 weist eine erste Abtasteinheit A1a für die erste Teilung T1a und eine zweite Abtasteinheit A1b für die zweite Teilung T1b auf; die beiden Abtasteinheiten A1a, A1b sind mittels eines Joches K1 in einem festen Abstand miteinander verbunden. In nicht dargestellter Weise besitzt die erste Abtasteinheit Ata eine Beleuchtungseinheit. eine erste Abtastteilung mit einem zugeordneten Detektor zum Abtasten der ersten Teilung T1a sowie eine erste Referenzabtastteilung mit einem zugeordneten Detektor zum Abtasten der ersten Referenzmarke R1a. In ebenfalls nicht dargestellter Weise besitzt die zweite Abtasteinheit A1b eine Beleuchtungseinheit, eine zweite Abtastteilung mit einem zugeordneten Detektor zum Abtasten der zweiten Teilung T1b sowie eine zweite Referenzabtastteilung mit einem zugeordneten Detektor zum Abtasten der zweiten Referenzmarke R1b.

Der der ersten Abtastteilung der ersten Abtasteinheit A1a zugeordnete Detektor erzeugt bei der Abtastung der ersten Teilung T1a erste Abtastsignale zur Gewinnung von ersten Positionsmeßwerten für die erste Meßrichtung X; ebenso erzeugt der der zweiten Abtastteilung der zweiten Abtasteinheit A1b zugeordnete Detektor bei der Abtastung der zweiten Teilung T1b zweite Abtastsignale zur Gewinnung von zweiten Positionsmeßwerten für die zweite Meßrichtung Y Desgleichen erzeugen der der ersten Referenzabtastteilung der ersten Abtasteinheit A1a zugeordnete Detektor bei der Abtastung der ersten Referenzmarke R1a ein erstes Referenzsignal für die erste Meßrichtung X und der der zweiten Referenzabtastteilung der zweiten Abtasteinheit A1b zugeordnete Detektor bei der Abtastung der zweiten Referenzmarke R1b ein zweites Referenzsignal für die zweite Meßrichtung Y. Derartige Referenzsignale dienen beispielsweise zur Wiedergewinnung einer Bezugsposition bei einer Unterbrechung des Meßvorganges.

In Figur 2 ist eine Maßverkörperung M3 mit einer ersten Markierung in Form einer Teilung T3 auf einer ersten Oberfläche F3b und mit einer zweiten Markierung in Form wenigstens einer Referenzmarke R3 auf einer zweiten Oberfläche F3a für eine Meßrichtung X gezeigt; die Teiiung T3 besteht aus einer Linearteilung mit senkrecht zur Meßrichtung X verlaufenden Teilungsstrichen. Die Maßverkörperung M3 ist mit einem der zu messenden Objekte (nicht dargestellt) verbunden.

Eine mit dem anderen Objekt verbundene Abtasteinrichtung A3 weist eine erste Abtasteinheit A3a für die Teilung T3 und eine zweite Abtasteinheit A3b für die Referenzmarke R3 auf; die beiden Abtasteinheiten A3a, A3b sind mittels eines Joches K3 in einem festen Abstand miteinander verbunden. In nicht dargestellter Weise besitzen die erste Abtasteinheit A3a eine Beleuchtungseinheit und eine Abtastteilung mit einem zugehörigen Detektor zum Abtasten der Teilung T3 sowie die zweite Abtasteinheit A3b eine Beleuchtungseinheit und eine Referenzabtastteilung mit einem zugehörigen Detektor zum Abtasten der Referenzmarke R3. Der erste Detektor erzeugt bei der Abtastung der Teilung T3 Abtastsignale zur Gewinnung von Positionsmeßwerten und der zweite Detektor bei der Abtastung der Referenzmarke R3 ein Referenzsignal für die Meßrichtung X.

In Figur 3 ist eine Maßverkörperung M4 mit einer ersten Markierung in Form einer Inkrementalteilung T4a auf einer ersten Oberfläche F4a und mit einer zweiten Markierung in Form einer Codeteilung T4b auf einer zweiten Oberfläche F4b für eine Meßrichtung X gezeigt. Die Maßverkörperung M4 ist mit einem der zu messenden Objekte (nicht dargestellt) verbunden.

Eine mit dem anderen Objekt verbundene Abtasteinrichtung A4 weist eine erste Abtasteinheit A4a für die Inkrementalteilung T4a und eine zweite Abtasteinheit A4b für die Codeteilung T4b auf; die beiden Abtasteinheiten A4a, A4b sind mittels eines Joches K4 in einem festen Abstand miteinander verbunden. In nicht dargestellter Weise besitzen die erste Abtasteinheit A4a eine Beleuchtungseinheit und eine Abtastteilung mit einem zugehörigen Detektor zum Abtasten der Inkrementalteilung T4a sowie die zweite Abtasteinheit A4b eine Beleuchtungseinheit und eine Abtastteilung mit zugehörigen Detektoren zum Abtasten der Codeteilung T4b Die beiden Detektoren erzeugen bei der gleichzeitigen Abtastung der Inkrementalteilung T4a und der Codeteilung T4b absolute Positionsmeßwerte für die Meßrichtung X.

Die Erfindung ist sowohl bei lichtelektrischen Positionsmeßeinrichtungen als auch bei magnetischen, induktiven und kapazitiven Meßeinrichtungen mit Erfolg einsetzbar.

Die beiden Abtasteinheiten Aa, Ab der Abtasteinrichtung A können auch jeweils nach unterschiedlichen physikalischen Abtastprinzipien ausgebildet sein.

## Patentansprüche

1. Positionsmeßeinrichtung zur Messung der Relativlage von Objekten, bei der wenigstens eine Abtasteinrichtung (A) eine Maßverkörperung (M) abtastet, die auf sich gegenüberliegenden Seiten meßtechnisch auswertbare Markierungen (T, R) aufweist, und bei der die Markierungen (T, R) auf jeder Seite der Maßverkörperung (M) von einer separaten Abtasteinheit (Aa, Ab) abtastbar sind, wobei die Markierungen (T, R) direkt gegenüberliegend, sich überlappend angeordnet sind, daß die sich direkt gegenüberliegenden Markierungen (T, R) unterschiedliche Strukturen und/oder unterschiedliche Lagezuordnungen zueinander aufweisen, von denen die eine Markierung (T1a) eine Teilung zur Gewinnung eines Positionsmeßwertes für eine erste Meßrichtung (X) und die andere Markierung (T1b) eine Teilung zur Gewinnung eines Positionsmeßwertes für eine zweite Meßrichtung (Y) ist, wobei die beiden Meßrichtungen (X,Y) senkrecht zueinander verlaufen.

2. Positionsmeßeinrichtung nach Anspruch 1, dadurch gekennzeichnet, daß sich die Teilungsstriche (T1a, T1b) über die gesamte Meßlänge (LY, LX) der zu ihrer zugehörigen Meßrichtung (X, Y) senkrechten Meßrichtung (Y, X) erstrecken.

3. Positionsmeßeinrichtung nach Anspruch 2, dadurch gekennzeichnet, daß den beiden Teilungen (T1a, T1b) jeweils eine Referenzmarke (R1a, R1b) zugeordnet ist, die sich über die gesamte Meßlänge (LY, LX) der zu ihrer zugehörigen Meßrichtung (X, Y) senkrechten Meßrichtung (Y, X) erstrecken.

4. Positionsmeßeinrichtung für wenigstens eine Meßrichtung (X, Y) zur Messung der Relativlage von Objekten, bei der wenigstens eine Abtasteinrichtung (A) eine Maßverkörperung (M) abtastet, die auf sich gegenüberliegenden Seiten meßtechnisch auswertbare Markierungen (T, R) aufweist, und bei der die Markierungen (T, R) auf jeder Seite der Maßverkörperung (M) von einer separaten Abtasteinheit (Aa, Ab) abtastbar sind, wobei die Markierungen (T, R) direkt gegenüberliegend, sich überlappend angeordnet sind und unterschiedliche Strukturen und/oder unterschiedliche Lagezuordnungen zueinander aufweisen, indem die eine Markierung eine Teilung (T3) für eine Meßrichtung (X) und die auf der gegenüberliegenden Seite angeordnete Markierung wenigstens eine Referenzmarke (R3) ist.

5. Positionsmeßeinrichtung für wenigstens eine Meßrichtung (X, Y) zur Messung der Relativlage von Objekten, bei der wenigstens eine Abtasteinrichtung (A) eine Maßverkörperung (M) abtastet, die auf sich gegenüberliegenden Seiten meßtechnisch auswertbare Markierungen (T, R) aufweist, und bei der die Markierungen (T, R) auf jeder Seite der Maßverkörperung (M) von einer separaten Abtasteinheit (Aa, Ab) abtastbar sind, wobei die Markierungen (T, R) direkt gegenüberliegend, sich überlappend angeordnet sind und unterschiedliche Strukturen und/oder unterschiedliche Lagezuordnungen zueinander aufweisen, indem die Markierung auf einer Seite (F4a) der Maßverkörperung (M4) eine Inkrementalteilung (T4a) für eine Meßrichtung (X) und die Markierung auf der anderen Seite (F4b) eine Codeteilung (T4b) für diese Meßrichtung (X) ist.

6. Positionsmeßeinrichtung nach einem der vorhergehenden Ansprüche, dadurch gekennzeichnet, daß die beiden Abtasteinheiten (Aa, Ab) der Abtasteinrichtung (A) jeweils nach unterschiedlichen physikalischen Abtastprinzipien ausgebildet sind.

## Claims

1. Position measuring device for measuring the relative position of objects, in which at least one scanning device (A) scans an embodiment of a measure (M) which on mutually opposed sides comprises markings (T, R) capable of being evaluated by measuring techniques, and in which the markings (T, R) on each side of the embodiment of a measure (M) can be scanned by a separate scanning unit (Aa, Ab), wherein the markings (T, R) are arranged directly opposite and overlapping each other, in that the directly opposed markings (T, R) have different structures and/or different position coordination with each other, of which one marking (T1a) is a graduation for obtaining a position measurement value for a first direction of measurement (X) and the other marking (T1b) is a graduation for obtaining a position measurement value for a second direction of measurement (Y), wherein the two directions of measurement (X, Y) extend perpendicularly to each other.

2. Position measuring device according to claim 1, characterised in that the graduation marks (T1a, T1b) extend over the whole length of measurement (LY, LX) of the direction of measurement (Y, X) perpendicular to their associated direction of measurement (X, Y).

3. Position measuring device according to claim 2, characterised in that associated with each of the two graduations (T1a, T1b) is a reference mark (R1a, R1b), which extend over the whole length of measurement (LY, LX) of the direction of measurement (Y, X) perpendicular to their associated direction of measurement (X, Y).

4. Position measuring device for measuring the relative position of objects, in which at least one scanning device (A) scans an embodiment of a measure (M) which on mutually opposed sides comprises markings (T, R) capable of being evaluated by measuring techniques, and in which the markings (T, R) on each side of the embodiment of a measure (M) can be scanned by a separate scanning unit (Aa, Ab), wherein the markings (T, R) are arranged directly opposite and overlapping each other and have different structures and/or different position coordination with each other, by the fact that one marking is a graduation (T3) for one direction of measurement (X) and the marking arranged on the opposite side is at least one reference mark (R3).

5. Position measuring device for at least one direction of measurement (X, Y) for measuring the relative position of objects, in which at least one scanning device (A) scans an embodiment of a measure (M) which on mutually opposed sides comprises markings (T, R) capable of being evaluated by measuring techniques, and in which the markings (T, R) on each side of the embodiment of a measure (M) can be scanned by a separate scanning unit (Aa, Ab), wherein the markings (T, R) are arranged directly opposite and overlapping each other and have different structures and/or different position coordination with each other, by the fact that the marking on one side (F4a) of the embodiment of a measure (M4) is an incremental graduation (T4a) for one direction of measurement (X) and the marking on the other side (F4b) is a code graduation (T4b) for this direction of measurement (X).

6. Position measuring device according to any of the preceding claims, characterised in that the two scanning units (Aa, Ab) of the scanning device (A) are constructed in each case according to different physical principles of scanning.

## Revendications

1. Dispositif de mesure de position pour mesurer la position relative d'objets, avec au moins un dispositif de lecture (A) explorant un élément de matérialisation de la mesure (M) qui présente des marques (T, R) exploitables du point de vue métrologique sur des côtés opposés, les marques (T, R) sur chaque côté de l'élément de matérialisation de la mesure (M) pouvant être explorées par une unité de lecture séparée (Aa, Ab), les marques (T, R), étant disposées directement en vis-à-vis, avec chevauchement, les marques (T, R) directement en vis-à-vis présentant des structures différentes et/ou des associations de position réciproque différentes, l'une des marques (T1a) étant une graduation pour délivrer une mesure de position pour une première direction de mesure (X) et l'autre marque (T1b) étant une graduation pour délivrer une mesure de position pour une deuxième direction de mesure (Y), les deux directions de mesure (X, Y) étant mutuellement perpendiculaires.

2. Dispositif de mesure suivant la revendication 1, caractérisé par le fait que les traits de graduation (T1a, T1b) s'étendent sur toute la longueur de mesure (LY, LX) de la direction de mesure (Y, X) perpendiculaire à leur direction de mesure (X, Y).

3. Dispositif de mesure suivant la revendication 2, caractérisé par le fait qu'une marque de référence (R1a, R1b) est associée à chacune des deux graduations (T1a, T1b), lesquelles marques de référence s'étendent sur toute la longueur de mesure (LY, LX) de la direction de mesure (Y, X) perpendiculaire à leur direction de mesure (X, Y).

4. Dispositif de mesure de position pour au moins une direction de mesure (X, Y), pour mesurer la position relative d'objets, avec au moins un dispositif de lecture (A) explorant un élément de matérialisation de la mesure (M) qui présente des marques (T, R) exploitables du point de vue métrologique sur des côtés opposés, les marques (T, R) sur chaque côté de l'élément de matérialisation de la mesure (M) pouvant être explorées par une unité de lecture (Aa, Ab) séparée, les marques (T, R), étant disposées directement en vis-à-vis, avec chevauchement et présentant des structures différentes et/ou des associations de position réciproque différentes, l'une des marques étant une graduation (T3) pour direction de mesure (X) et la marque disposée sur le côté opposé étant au moins une marque de référence (R3).

5. Dispositif de mesure de position pour au moins une direction de mesure (X, Y), pour mesurer la position relative d'objets, avec au moins un dispositif de lecture (A) explorant un élément de matérialisation de la mesure (M) qui présente des marques (T, R) exploitables du point de vue métrologique sur des côtés opposés, les marques (T, R) sur chaque côté de l'élément de matérialisation de la mesure (M) pouvant être explorées par une unité de lecture (Aa, Ab) séparée, les marques (T, R), étant disposées directement en vis-à-vis, avec chevauchement et présentant des structures différentes et/ou des associations de position réciproque différentes, la marque sur un côté (F4a)) de l'élément de matérialisation de la mesure (M4) étant une graduation incrémentale (T4a) pour une direction de mesure (X) et la marque disposée sur le côté opposé (F4b) étant une graduation codée (T4b) pour cette direction de mesure (X).

6. Dispositif de mesure suivant une des revendications précédentes, caractérisé par le fait que les deux unités de lecture (Aa, Ab) du dispositif de lecture (A) sont réalisées suivant des principes d'exploration physique différents.
